# EUROPÄISCHE PATENTANMELDUNG

(11) **EP 2 947 400 A1**
(43) Veröffentlichungstag der Anmeldung: **25.11.2015**
(21) Anmeldenummer: 15455006.5
(22) Anmeldetag: 27.04.2015
(51) Int. Cl.: F24J 3/08

(54) **SONDENROHR FÜR TIEFENBOHRUNGEN**

(30) Priorität: 21.05.2014 AT 503652014
(71) Anmelder: Mittermayr, Dominik, 4122 Arnreit (AT); Mittermayr, Karl, 4122 Arnreit (AT); Mittermayr, Klemens, 4121 Altenfelden (AT)
(72) Erfinder: Mittermayr, Dominik, 4122 Arnreit (AT); Mittermayr, Karl, 4122 Arnreit (AT); Mittermayr, Klemens, 4121 Altenfelden (AT)
(74) Vertreter: Wildhack & Jellinek

(57) **Zusammenfassung**

Die Erfindung betrifft ein Sondenrohr für Tiefenbohrungen mit einem auf dem Sondenrohr (1) aufgesetzten Sondenkopf (2), in dem ein Wärmetauscher (3) angeordnet ist, wobei der Sondenkopf (2) und der Wärmetauscher (3) aus Kupfer oder einer Kupferlegierung gefertigt sind, das Sondenrohr (1) aus Aluminium oder einer Aluminiumlegierung gefertigt ist und das Sondenrohr (1) und der Sondenkopf (2) über einen mechanisch festlegbaren Adapter (4), vorzugsweise Schraubadapter, miteinander gasdicht verbunden oder verbindbar sind.

## Beschreibung

Die Erfindung betrifft ein Sondenrohr für Tiefenbohrungen mit einem auf dem Sondenrohr aufgesetzten Sondenkopf, in dem ein Wärmetauscher angeordnet ist.

Derartige Sondenrohre sind beispielsweise aus EP 1634022 B1 bekannt. Das Material, aus dem der Sondenkopf und das Sondenrohr hergestellt wird, ist durchwegs Kupfer, wobei diese beiden Bauteile miteinander verlötete Kupferteile sind. Derartige Sondenrohre besitzen jedoch Nachteile hinsichtlich ihrer Handhabbarkeit, ihres Gewichts, ihrer Festigkeit und ihrer Wirtschaftlichkeit.

Ziel der Erfindung ist es diese Nachteile zu vermeiden.

Erfindungsgemäß ist ein Sondenrohr, der eingangs genannten Art, mit den im Kennzeichen des Patentanspruches 1 angeführten Merkmalen charakterisiert. Es ist somit vorgesehen, dass
- der Sondenkopf und der Wärmetauscher aus Kupfer oder einer Kupferlegierung gefertigt sind,
- das Sondenrohr aus Aluminium oder einer Aluminiumlegierung gefertigt ist und
- das Sondenrohr und der Sondenkopf über einen mechanisch festlegbaren Adapter, vorzugsweise Schraubadapter, miteinander gasdicht verbunden oder verbindbar sind.

Es zeigt sich in der Praxis, dass der Einsatz des aus Aluminium oder aus einer Aluminiumlegierung gefertigten Sondenrohres, das über den speziell ausgebildeten Adapter mit dem Sondenkopf verbunden ist, besondere Vorteile bringt. Aus dem Stand der Technik sind für derartige Sondenrohre lediglich Kunststoffrohre oder Kupferrohre bekannt. Insbesondere im Hinblick auf die im Betrieb von CO₂-Sondenrohren herrschenden Drücke von durchaus mehr als 40 bar ist der Einsatz von Kunststoffrohren aus Fertigkeitsgründen nicht mehr gut möglich. Der Marktpreis für Kupfer ist unverhältnismäßig hoch angestiegen.

Beim Einsatz von Aluminium oder Aluminiumlegierungen als Werkstoff für das Sondenrohr waren eine Vielzahl von Bedenken der Fachwelt zu überwinden. Aluminiumrohre bzw. Werkstoffe aus Aluminium sind nicht ohne weiteres mit Werkstoffen aus Kupfer verbindbar. Eine üblicherweise erstellbare Lötverbindung zwischen dem Sondenkopf und dem Sondenrohr konnte für einen aus Kupfer bestehenden Sondenkopf und ein aus Aluminium bestehenden Sondenrohr aufgrund in der Praxis nicht überwindbaren Lötschwierigkeiten nicht vorgesehen werden. Diese ungünstigen Löteigenschaften machten somit den Einsatz eines Adapters bzw. eines Verbindungsstückes zwischen dem Sondenkopf und dem Sondenrohr erforderlich. Abgesehen von den verbesserten Festigkeitseigenschaften von Sondenrohren aus Aluminium, insbesondere ihrer höheren Steifigkeit, ergibt sich beim Einsatz von Aluminiumrohren eine beträchtliche Gewichtsersparnis, womit auch das Handling derartiger Rohre erleichtert wird. Die höhere Steifigkeit von Aluminiumrohren bringt auch beim Einführen der Rohre in die Tiefenbohrung Vorteile, da sich die Sondenrohre beim Absenken nicht mehr so leicht verbiegen und festfahren. Zudem wird der Arbeitsprozess auf der Baustelle für das ausführende Personal vereinfacht, weil durch Gewichtsminderungen der Sonde eine gesundheitsunterstützende Arbeitsweise ermöglicht wird. Um das geringere Gewicht gegenüber einer Kupfersonde beim Einbringen in ein Bohrloch zu kompensieren, wird das zur Abteufung benötigte Zusatzgewicht am Sondenfuß mittels einer Schraubverbindung befestigt. Somit lässt sich das benötigte Gesamtgewicht aus Aluminiumsonde und Zusatzgewicht vorteilhafterweise in zwei Arbeitsschritten zum Bohrloch transportieren.

Von Vorteil ist es, wenn das aus Aluminium oder aus Aluminiumlegierung bestehende Sondenrohr zur Verbindung mit dem aus Kupfer oder einer Kupferlegierung bestehenden Sondenkopf eine, vorzugsweise einstückig ausgeformte(n) bzw. ausgebildete(n) nach außen gerichtete Umbiegung oder Umbördelung oder einen nach außen ragenden bzw. abgehenden Flansch aufweist, die bzw. der mit dem zwischen dem Sondenkopf und dem Sondenrohr vorgesehenen Adapter zusammenwirkt; das Sondenrohr kann mittels des Adapters gasdicht mit dem Sondenkopf verbunden werden.

Erfindungsgemäß kann vorgesehen sein, dass der sondenrohrseitige Endbereich des Sondenkopfes rohrförmig ausgebildet ist und als Adapter ein Schraubgewinde oder eine Muffe mit Schraubengewinde trägt, auf das bzw. die eine den Endbereich des Sondenrohres umgebende Dichtmuffe aufschraubbar ist. Damit kann der Adapter einfach gasdicht an den Sondenkopf angeschlossen werden.

Von Vorteil ist es, wenn die Umbiegung oder die Umbördelung oder der Flansch zwischen einer dem Sondenrohr zugekehrten Endfläche des Schraubgewindes oder der Schraubmuffe und einer das Sondenrohr umgebenden und zum Sondenkopf gerichteten Druckfläche der Dichtmuffe liegt und die Endfläche und die Druckfläche und die Umbiegung oder die Umbördelung oder der Flansch, gegebenenfalls unter Zwischenlage von Dichtungen, gasdicht aneinander gepresst sind. Damit ist ein einfacher Aufbau gewährleistet.

Bei einer vorteilhaften Ausführungsform ist vorgesehen, dass das Schraubengewinde und die Schraubmuffe aus Kupfer oder einer Kupferlegierung, insbesondere Messing, gefertigt sind. Damit ist der Adapter kostengünstig und einfach herstellbar. Da der Adapter aus dem Material des Sondenkopfes oder einer vergleichbaren Legierung hergestellt ist, ist er einfach mit dem Sondenkopf durch Verlöten verbindbar.

Die Verbindung des Sondenkopfes mit dem Sondenrohr erfolgt jedoch nicht durch eine Lötverbindung, sondern mittels des mechanisch festlegbaren Adapters, der die gasdichte Verbindung zwischen dem Sondenrohr und dem Sondenkopf gewährleistet.

Für die Ausbildung des Sondenkopfes ist es in Abstimmung mit dem Sondenrohr von Vorteil, wenn vorgesehen ist, dass der Wärmetauscher von einer in Form eines hohl zylindrischen Körpers gewendelten Rohrleitung gebildet ist, wobei die Rohrabschnitte für die Zu- und Ableitung des Wärmeträgerfluids unmittelbar nebeneinander liegend und jeweils in Gegenstromrichtung durchströmbar geführt sind. Dabei kann es von besonderem Vorteil bezüglich des Wärmeaustausches sein, wenn die Rohrleitung des Wärmetauschers mit den Rohrabschnitten an der Innenwandung des Sondenkopfes anliegt oder der Abstand zwischen der Rohrleitung bzw. den Rohrabschnitten und der Innenwandung kleiner ist als der halbe Durchmesser der Rohrleitung bzw. der Rohrabschnitte.

Für die Effizienz des Wärmeaustausches zwischen dem im Sondenrohr befindlichen Fluid und dem den Wärmeaustauscher durchströmenden Wärmeträgerfluids ist es von Vorteil, wenn der Außendurchmesser der Rohrleitung 50 bis 80%, vorzugsweise 65 bis 75%, des Außendurchmessers des Sondenrohrs beträgt. Damit kann eine Anpassung der Leistung des Sondenrohres an die Leistung des Wärmetauschers erfolgen. Es können die Wärmeleitungsverhältnisse und Wärmeübergangsverhältnisse im Sondenrohr, das aus Aluminium bzw. aus Aluminiumlegierung gefertigt ist, an die Verhältnisse in den Kupferrohren angepasst werden. Für die Praxis zeigte es sich, dass der Einsatz von Sondenrohren aus Aluminium oder Aluminiumlegierungen den Wirkungsgrad von Tiefensonden nicht negativ beeinflusst.

Im Folgenden wird die Erfindung anhand der Zeichnungen beispielsweise näher erläutert.

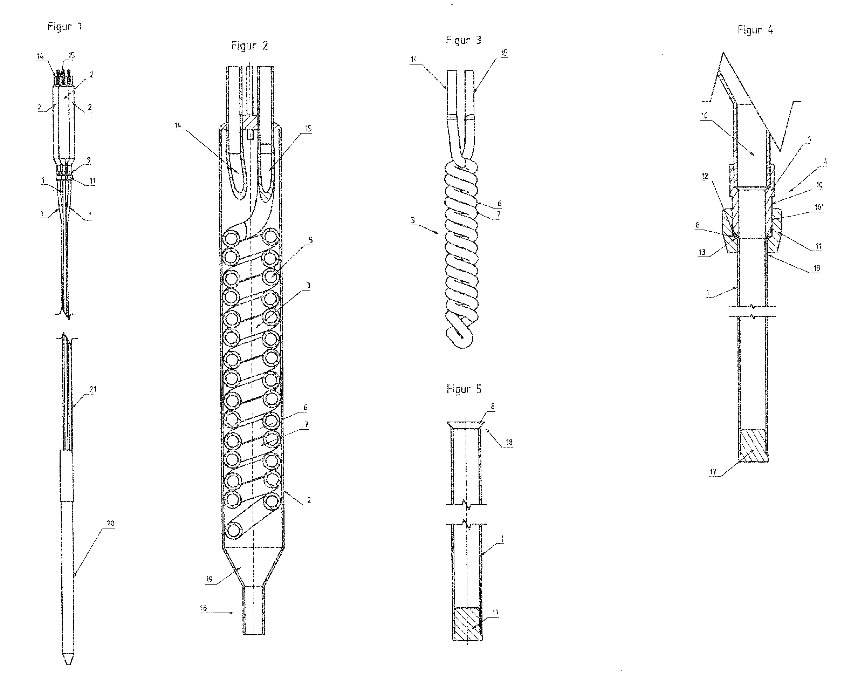

Fig. 1 zeigt schematisch eine Tiefensonde. Fig. 2 zeigt einen schematischen Schnitt durch einen Sondenkopf. Fig. 3 zeigt eine Ansicht eines im Sondenkopf angeordneten Wärmetauschers. Fig. 4 zeigt einen schematischen Schnitt durch ein Sondenrohr. Fig. 5 zeigt eine Detailansicht des dem Sondenkopf nahen Endbereiches eines Sondenrohres.

In Fig. 1 ist eine Sondenanordnung dargestellt, die drei Sondenrohre 1 und drei Sondenköpfe 2 aufweist, die zu einer in eine Tiefenbohrung absenkbaren Baueinheit zusammengefasst sind. Die Sondenköpfe 2 befinden sich beim Einsatz der Tiefensonde im Bereich der Erdoberfläche, wogegen die Sondenrohre 1 bis zu 100 m und auch mehr lang sind und in eine Tiefenbohrung abgesenkt werden.

Der in Fig. 2 im schematischen Schnitt dargestellte Sondenkopf 2 besitzt in seinem Inneren einen Wärmetauscher 3, so wie dieser in Fig. 3 schematisch dargestellt ist. Dieser Wärmetauscher 3 nimmt Wärme aus dem im Sondenrohr 1 verdampften und aufgestiegenen CO₂ auf, sodass das CO₂ kondensiert oder sich abkühlt und im Sondenrohr 1 absinkt. Der Wärmetauscher umfasst Anschlüsse 14, 15 für das den Wärmetauscher 3 durchströmende Wärmeträgerfluid. Die an die Anschlüsse 14, 15 anschließenden Rohrabschnitte 6, 7 sind nebeneinander geführt und zu einem hohl zylindrischen Körper geformt, der in den Sondenkopf 2 eingesetzt ist. Dabei kann vorgesehen sein, dass die Rohrleitung 5 des Wärmetauschers 3 mit den Rohrabschnitten 6, 7 an der Innenwandung des Sondenkopfes 2 anliegt oder der Abstand zwischen der Rohrleitung 5 bzw. den Rohrabschnitten 6, 7 und der Innenwandung kleiner ist als der halbe Durchmesser der Rohrleitung 5 bzw. der Rohrabschnitte 6, 7. Für eine Verbesserung des Wärmeüberganges kann des Weiteren auch vorgesehen sein, dass die Rohrleitung 5 an ihrer Außenfläche mit Rippen versehen ist.

Im sondennahen Bereich des Sondenkopfes 2 befindet sich eine konische Verjüngung 19, an die ein rohrförmiger Endbereich 16 des Sondenkopfes 2 anschließt.

Wie in Fig. 4 dargestellt ist dieser rohrförmige Endbereich 16 mit einem Schraubgewinde oder einem Schraubadapter 9 mit Schraubgewinde 10 verbunden, insbesondere verlötet, auf welches Schraubgewinde 10 bzw. welchen Schraubadapter 9 eine Schraubmuffe 11 mit ihrem Gewinde 10 aufschraubbar ist. Zwischen der sondenrohrnahe Endfläche 12 des Schraubadapters 9 und der sondenkopfnahen Dichtfläche 13 der Schraubmuffe 11 liegt ein umgebördelter Rand oder eine Abbiegung oder ein ringförmig umlaufender Flansch 8 des Sondenrohres 1, der bzw. die am sondenkopfnahen Endbereich 18 des Sondenrohres 1 ausgebildet ist. Diese Umbiegung oder Umbördelung oder dieser Flansch 8 ist gegebenenfalls unter Einsatz von Dichtscheiben zwischen den Flächen 12, 13 eingepresst und bietet eine gasdichte Verbindung zwischen dem Sondenkopf 2 und dem Sondenrohr 1. Auf diese Weise werden die Bauteile aus unterschiedlichen Materialien, nämlich Kupfer bzw. eine Kupferlegierung einerseits und Aluminium bzw. einer Aluminiumlegierung anderseits gasdicht und ohne die Erfordernis, eine Lötverbindung auszubilden, verbunden. Der Schraubadapter 9 und die Dichtmuffe 11 sind über ihre Schraubgewinde 10, 10' miteinander verschraubbar. Der nötige Dichtbereich ergibt sich durch Verpressung des Flansches 8 über die Endfläche 12 und die Dichtfläche 13.

Es besteht die Möglichkeit, andere gasdichte, mechanisch hergestellte festlegbare Verbindungen zwischen dem Sondenrohr 1 und dem Sondenkopf 2 auszubilden. Wesentlich ist, dass durch die mechanische Verbindung ein derartiger Anpressdruck bzw. Dichtdruck erstellt wird, dass eine gasdichte, insbesondere CO₂-dichte Verbindung der aus unterschiedlichen Materialien bestehenden Bauteile erzielt wird.

Das dem Sondenkopf 2 ferne Ende des Sondenrohres 1 ist mit einem eingelöteten Endstopfen 17, vorteilhafterweise aus Aluminium oder einer Aluminiumlegierung, insbesondere aus demselben Material wie das Sondenrohr 1, gasdicht verschlossen, insbesondere verlötet.

Fig. 1 zeigt, dass am bohrlochseitigen Ende des Sondenrohres 1 ein Zusatzgewicht 20 befestigt und gegebenenfalls über eine Schraubverbindung angeschlossen ist. Damit sind das Sondenrohr 1 und das Zusatzgewicht 20 getrennt transportierbar.

Ferner ist aus Fig. 1 ersichtlich, dass als zusätzliche Schutzeinrichtung ein Potentialausgleich mit ins Bohrloch verbracht wird. Dazu ist vorgesehen, dass der Sondenkopf 2 mit dem bohrlochseitigen Endbereich des Sondenrohres 1 zum Potentialausgleich über einen elektrischen Leiter, gegebenenfalls einen Kupferdraht, verbunden ist. Mit einem Kupferdraht mit einem Querschnitt von 4 mm2 wird ein wirksamer Schutz gegen Potentialunterschiede am Aluminiumrohr gewährleistet.

## Patentansprüche

1. Sondenrohr für Tiefenbohrungen mit einem auf dem Sondenrohr (1) aufgesetzten Sondenkopf (2), in dem ein Wärmetauscher (3) angeordnet ist, **dadurch gekennzeichnet, dass**
- der Sondenkopf (2) und der Wärmetauscher (3) aus Kupfer oder einer Kupferlegierung gefertigt sind,
- das Sondenrohr (1) aus Aluminium oder einer Aluminiumlegierung gefertigt ist und
- das Sondenrohr (1) und der Sondenkopf (2) über einen mechanisch festlegbaren Adapter (4), vorzugsweise Schraubadapter, miteinander gasdicht verbunden oder verbindbar sind.

2. Sondenrohr nach Anspruch 1, **dadurch gekennzeichnet, dass** der Wärmetauscher (3) von einer in Form eines hohl zylindrischen Körpers gewendelten Rohrleitung (5) gebildet ist, wobei die Rohrabschnitte (6, 7) für die Zu- und Ableitung des Wärmeträgerfluids unmittelbar nebeneinander liegend und jeweils in Gegenstromrichtung durchströmbar geführt sind.

3. Sondenrohr nach Anspruch 2, **dadurch gekennzeichnet, dass** der sondenkopfseitige Endbereich (18) des Sondenrohrs (1) eine umlaufende nach außen gerichtete Umbiegung oder Umbördelung oder einen umlaufenden nach außen ragenden ringförmigen Flansch (8) aufweist.

4. Sondenrohr nach einem der Ansprüche 1 bis 3, **dadurch gekennzeichnet, dass** die Rohrleitung (5) des Wärmetauschers (3) mit den Rohrabschnitten (6, 7) an der Innenwandung des Sondenkopfes (2) anliegt oder der Abstand zwischen der Rohrleitung (5) bzw. den Rohrabschnitten (6, 7) und der Innenwandung kleiner ist als der halbe Durchmesser der Rohrleitung (5) bzw. der Rohrabschnitte (6, 7).

5. Sondenrohr nach einem der Ansprüche 1 bis 4, **dadurch gekennzeichnet, dass** die Rohrleitung (5) an ihrer Außenfläche mit Rippen versehen ist.

6. Sondenrohr nach einem der Ansprüche 1 bis 5, **dadurch gekennzeichnet, dass** der sondenrohrseitige Endbereich (16) des Sondenkopfes (2) rohrförmig ausgebildet ist und als Adapter (4) ein Schraubgewinde (10) oder eine Muffe (9) mit Schraubengewinde (10) trägt, auf das bzw. die eine den Endbereich des Sondenrohres (1) umgebende Dichtmuffe (11) aufschraubbar ist.

7. Sondenrohr nach einem der Ansprüche 1 bis 6, **dadurch gekennzeichnet, dass** die Umbiegung oder die Umbördelung oder der Flansch (8) zwischen einer dem Sondenrohr (1) zugekehrten Endfläche (12) des Schraubgewindes (10) oder der Schraubmuffe (9) und einer das Sondenrohr (1) umgebenden und zum Sondenkopf (2) gerichteten Druckfläche (13) der Dichtmuffe (11) liegt und die Endfläche (12) und die Druckfläche (13) und die Umbiegung oder die Umbördelung oder der Flansch (8), gegebenenfalls unter Zwischenlage von Dichtungen, gasdicht aneinander gepresst sind.

8. Sondenrohr nach Anspruch 6 oder, 7 **dadurch gekennzeichnet, dass** das Schraubengewinde (10) und die Schraubmuffe (9) aus Kupfer oder einer Kupferlegierung, insbesondere Messing, gefertigt sind.

9. Sondenrohr nach einem der Ansprüche 1 bis 8, **dadurch gekennzeichnet, dass** der Außendurchmesser der Rohrleitung (5) 50 bis 80%, vorzugsweise 65 bis 75%, des Außendurchmessers des Sondenrohrs (1) beträgt.

10. Sondenrohr nach einem der Ansprüche 1 bis 9, **dadurch gekennzeichnet, dass** am bohrlochseitigen Ende des Sondenrohres (1) ein Zusatzgewicht (20) befestigt und gegebenenfalls über eine Schraubverbindung angeschlossen ist.

11. Sondenrohr nach einem der Ansprüche 1 bis 10, **dadurch gekennzeichnet, dass** der Sondenkopf (2) mit dem bohrlochseitigen Endbereich des Sondenrohres (1) zum Potentialausgleich über einen elektrischen Leiter, gegebenenfalls einen Kupferdraht, verbunden ist.
